# FASCICULE DE BREVET EUROPEEN

(11) **EP 3 350 119 B1**
(45) Date de publication et mention de la délivrance du brevet: **19.06.2019**
(21) Numéro de dépôt: 16745804.1
(22) Date de dépôt: 20.07.2016
(51) Int. Cl.: C01B 3/50, F25J 3/02

(54) **PROCÉDÉ ET APPAREIL DE PRODUCTION D'UN MÉLANGE DE MONOXYDE DE CARBONE ET D'HYDROGÈNE**
VERFAHREN UND VORRICHTUNG ZUR HERSTELLUNG EINER MISCHUNG AUS KOHLENMONOXID UND WASSERSTOFF
METHOD AND APPARATUS FOR PRODUCING A MIXTURE OF CARBON MONOXIDE AND HYDROGEN

(30) Priorité: 18.09.2015 FR 1558788
(43) Date de publication de la demande: 25.07.2018
(73) Titulaire: L'Air Liquide Société Anonyme pour l'Etude et l'Exploitation des Procédés Georges Claude, 75007 Paris (FR)
(72) Inventeur: FERNANDEZ, Angela, 75011 Paris (FR); HERNANDEZ, Antoine, 77340 Pontault Combault (FR); TSEVERY, Jean-Marc, 77127 Lieusaint (FR)
(74) Mandataire: Mercey, Fiona Susan
(86) Numéro de dépôt international: PCT/FR2016/051865
(87) Numéro de publication internationale: WO 2017/046462

(56) Documents cités:
- EP-A1- 1 479 990
- US-A- 4 488 890

## Description

La présente invention est relative à un procédé et à un appareil de production d'un mélange gazeux de monoxyde de carbone et d'hydrogène.

Les unités de production de monoxyde de carbone et d'hydrogène peuvent être séparées en deux parties :
- génération du gaz de synthèse (mélange contenant H2, CO, CH4, CO2, Ar et N2 essentiellement).
- purification du gaz de synthèse.

On retrouve :
- une unité de lavage à un solvant liquide pour éliminer la plus grande partie des gaz acides contenus dans le gaz de synthèse
- une unité d'épuration sur lit d'adsorbants.
- une unité de séparation par voie cryogénique dite boite froide pour la production de CO ou bien de mélange H2/CO dit oxogas où les teneurs en CH4 et N2 sont faibles.

Dans l'état de l'art, il est connu de produire un mélange gazeux de monoxyde de carbone et d'hydrogène en réchauffant de l'hydrogène issu d'un procédé cryogénique de séparation d'un mélange d'au moins d'hydrogène et de monoxyde de carbone, en réchauffant du monoxyde de carbone issu du même procédé, en comprimant le monoxyde de carbone dans un compresseur et en mélangeant l'hydrogène réchauffé avec le monoxyde de carbone réchauffé et comprimé. Un exemple d'un tel procédé est décrit dans US-A-4488890.

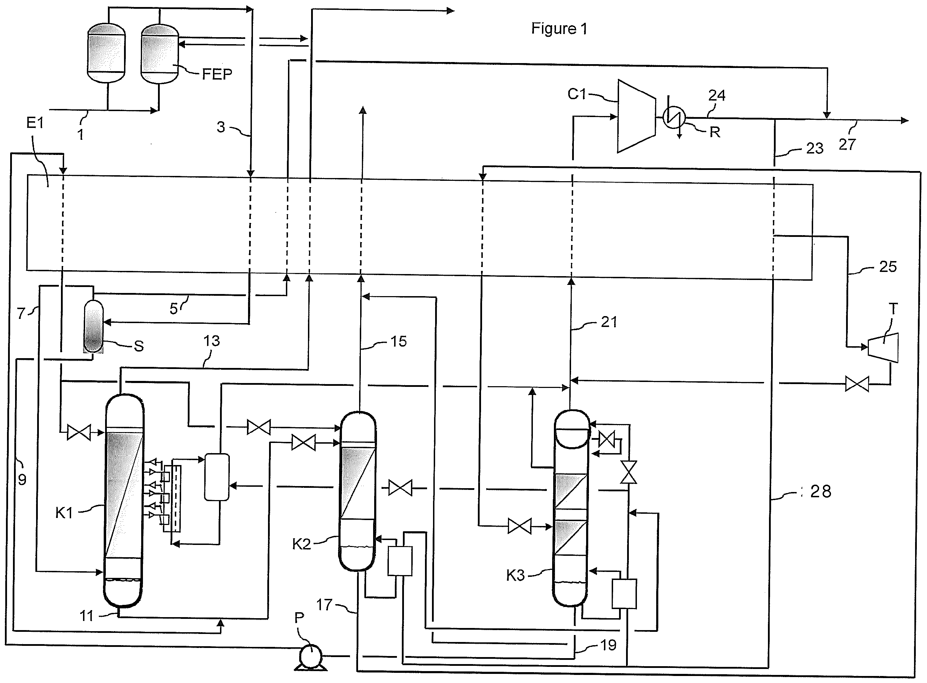

Dans l'exemple illustré dans la Figure 1 qui n'est pas un procédé selon l'invention, le monoxyde de carbone qui est séparé par voie cryogénique est produit à la pression requise avec un premier compresseur C1 et sort du premier compresseur à une température aux environs de 100°C, pour être refroidi ensuite dans un échangeur de chaleur R avec de l'eau de refroidissement venant du circuit principal d'eau de refroidissement du procédé de séparation dont la température est autour de 33°C généralement.

Le gaz de synthèse 1 est épuré dans une unité d'épuration FEP pour enlever l'eau et le dioxyde de carbone. Le gaz épuré 3 se refroidit dans un échangeur de chaleur E1 où il se condense partiellement. Le gaz partiellement condensé est séparé dans un séparateur de phases S. Le gaz formé dans le séparateur de phases est divisé en deux, une partie 5 étant réchauffée dans l'échangeur E1 pour former de l'hydrogène impur à environ 37°C et l'autre partie 7 étant séparée dans une colonne de lavage au méthane K1. Le liquide 9 du séparateur de phases S est mélangé avec le liquide de cuve 11 de la colonne K1 et envoyé après détente à une colonne d'épuisement K2.

Le gaz de tête de la colonne K1 représente le produit 13 riche en hydrogène du procédé.

Le gaz de tête de la colonne K2 représente un gaz résiduaire 15.

Le liquide de cuve 17 de la colonne K2 est envoyé à une colonne K3 qui sépare le monoxyde de carbone et le méthane présent dans le liquide 17. Un liquide riche en méthane 19 sort en cuve de la colonne K3, est pressurisé dans une pompe P et envoyé en tête des colonnes K1, K2. Le monoxyde de carbone gazeux 21 produit en tête de la colonne K3 est envoyé au premier compresseur C1.

Une partie 23 du monoxyde de carbone comprimé est refroidie dans l'échangeur E1 et divisée en deux. Une partie 25 est détendue dans la turbine T et remélangée avec le gaz de tête 21. Le reste 28 sert à rebouillir la cuve de la colonne K3 et la cuve de la colonne K2.

On voit donc que l'unité de séparation, dans ce cas, est constituée par un appareil de distillation cryogénique comprenant une colonne de lavage au méthane et une colonne de séparation de monoxyde de carbone et d'hydrogène. L'invention s'applique aussi à d'autres procédés alimentés à partir d'autres appareils de distillation cryogénique et peuvent comprendre un appareil de séparation par condensation partielle, en particulier si le gaz de synthèse ne contient pas de méthane.

La fraction riche en hydrogène 13 produite par la boite froide de l'unité de séparation sort de l'échangeur principal E1 au bout chaud et donc à une température environ de 37 °C soit une température proche de la température d'entrée du gaz de synthèse et du fluide venant du compresseur de cycle C1.

Le monoxyde de carbone 21 ,24 est ensuite mélangé avec la fraction riche en hydrogène pour former un oxogas 27 dont la température est voisine de 39°C, cet oxogas résultant alimentant un compresseur avant d'être envoyé vers une unité de production de méthanol ou autres.

Il peut être intéressant de produire l'oxogas 27 à une température bien plus froide que la température du circuit d'eau de refroidissement général afin de réduire le débit volumique à l'aspiration du compresseur d'oxogas, de réduire le nombre d'étages de cette compression et donc réduire l'investissement du compresseur et également réduire sa consommation électrique. Par exemple, il peut être nécessaire de produire l'oxogas à une température maximale de 20°C.

L'invention propose de produire un mélange H2/CO dit oxogas à une température bien inférieure à la température du circuit d'eau de refroidissement général et surtout d'assurer de faible variation autour de ce niveau de température.

Le mélange d'hydrogène et de monoxyde de carbone peut comprendre n'importe quel rapport entre l'hydrogène et monoxyde de carbone. De préférence, il contient entre 20 et 80% d'hydrogène et entre 20 et 80% de monoxyde de carbone, voire entre 40 et 60% d'hydrogène et entre 40 et 60% de monoxyde de carbone.

Le refroidissement d'un mélange du mélange d'hydrogène et de monoxyde de carbone dit oxogas est de préférence assuré par échange thermique avec un cycle frigorifique commun à la séparation cryogénique produisant l'hydrogène et/ou le monoxyde de carbone pour l'oxogas.

Le mélange produit peut être refroidi à une température inférieure à 40°C, voire inférieure à 30°C, de préférence inférieure à 20°C.

Selon un objet de l'invention, il est prévu un procédé de production d'un mélange gazeux de monoxyde de carbone et d'hydrogène dans lequel :
i) un premier gaz comprenant au moins 50% de monoxyde de carbone est comprimé dans un premier compresseur pour former un premier gaz comprimé refroidi à une première température
ii) un deuxième gaz comprenant au moins 50% d'hydrogène est mélangé avec le premier gaz comprimé pour former le mélange gazeux
iii) au moins un des premier et deuxième gaz provient d'une unité de séparation par distillation cryogénique dans lequel un gaz d'alimentation contenant de l'hydrogène et du monoxyde de carbone se refroidit dans un premier échangeur de chaleur et est séparé dans au moins une colonne de distillation
   caractérisé en ce que
   a) une partie du premier gaz comprimé est envoyée à l'unité de séparation, où elle se refroidit, par exemple dans le premier échangeur de chaleur, jusqu'à une deuxième température inférieure à la première température, par exemple jusqu'à une température intermédiaire du premier échangeur de chaleur et ensuite se mélange avec le mélange gazeux ou le deuxième gaz et/ou
   b) au moins une partie du deuxième gaz se réchauffe dans l'unité de séparation, par exemple dans le premier échangeur de chaleur, jusqu' à une troisième température inférieure à la première température, par exemple jusqu'à une température intermédiaire du premier échangeur de chaleur et ensuite est envoyée se mélanger avec le premier gaz.
   Selon d'autres aspects facultatifs de l'invention :
   - les premier et deuxième gaz proviennent de l'unité de séparation par distillation cryogénique.
   - une partie du deuxième gaz se réchauffe dans l'unité de séparation jusqu'à une température supérieure à la troisième température et ensuite est envoyée se mélanger avec le premier gaz.
   - le mélange gazeux est ensuite comprimé dans un deuxième compresseur.
   - une première partie du premier gaz comprimé refroidi est envoyée à au premier ou à un deuxième échangeur de chaleur de l'unité de séparation où elle se refroidit jusqu'à une température intermédiaire de l'échangeur de chaleur et ensuite se mélange avec le mélange gazeux ou le deuxième gaz et une autre partie du premier gaz comprimé refroidi se refroidit à une température inférieure à la température intermédiaire du premier ou deuxième échangeur de chaleur et sert à réchauffer une colonne de distillation de l'unité.
   - une première partie du premier gaz comprimé refroidi est envoyée au premier ou à un deuxième échangeur de chaleur où elle se refroidit jusqu'à une température intermédiaire de l'échangeur de chaleur et ensuite se mélange avec le mélange gazeux ou le deuxième gaz et une autre partie du premier gaz comprimé se refroidit dans le premier ou deuxième échangeur de chaleur et est détendue dans une turbine pour fournir des frigories à l'unité.
   - seulement une première partie du premier gaz se refroidit dans un refroidisseur en aval du premier compresseur et une autre partie du premier gaz est prise en amont du refroidisseur et mélangée avec la première partie et/ou le mélange gazeux afin d'en régler la température.

Selon un autre objet de l'invention, il est prévu un appareil de production d'un mélange gazeux de monoxyde de carbone et d'hydrogène comprenant:
un premier compresseur, des moyens pour envoyer un premier gaz comprenant au moins 50% de monoxyde de carbone se comprimer dans le premier compresseur pour former un premier gaz comprimé et refroidi pour former un premier gaz comprimé refroidi à une première température, des moyens pour mélanger un deuxième gaz comprenant au moins 50% d'hydrogène avec le premier gaz comprimé pour former le mélange gazeux, une unité de séparation par distillation cryogénique, au moins un des premier et deuxième gaz provenant de unité de séparation par distillation cryogénique, un premier échangeur de chaleur, des moyens pour envoyer un gaz d'alimentation contenant de l'hydrogène et du monoxyde de carbone se refroidir dans le premier échangeur de chaleur et se séparer dans au moins une colonne de distillation
caractérisé en ce qu'il comprend
   a) des moyens pour envoyer une partie du premier gaz comprimé à l'unité de séparation, se refroidir, par exemple dans le premier échangeur de chaleur, jusqu'à une deuxième température inférieure à la première température, par exemple jusqu'à une température intermédiaire du premier échangeur de chaleur et ensuite se mélanger avec le mélange gazeux ou le deuxième gaz et/ou
   b) des moyens pour envoyer au moins une partie du deuxième gaz se réchauffer dans l'unité de séparation, par exemple dans le premier échangeur de chaleur, jusqu' à une troisième température inférieure à la première température, par exemple jusqu'à une température intermédiaire du premier échangeur de chaleur et ensuite se mélanger avec le premier gaz.

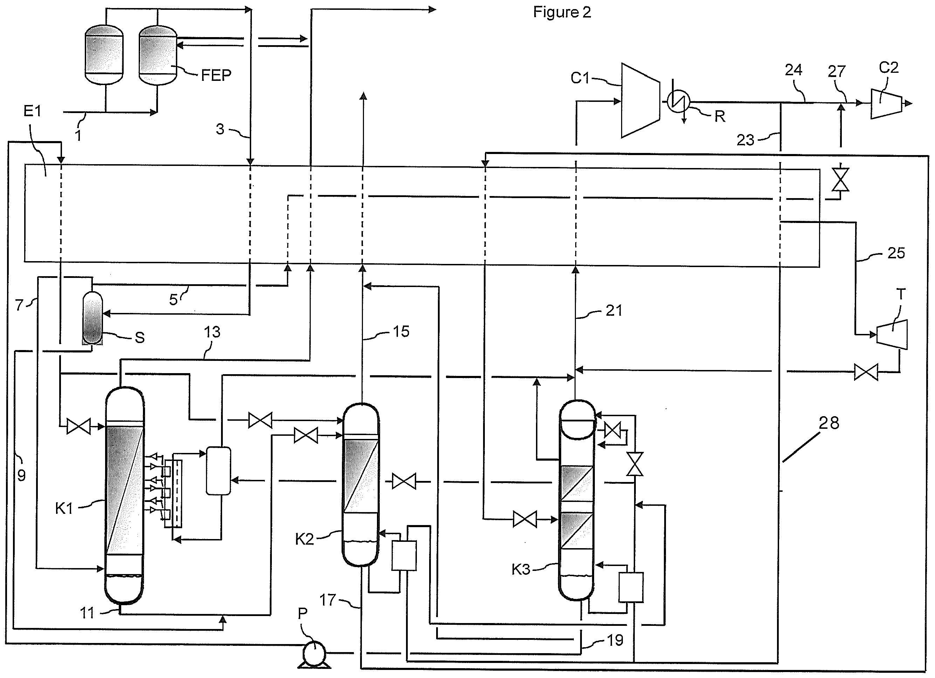

L'invention sera décrite en plus de détail en se référant aux figures, les figures 2 à 5 représentant des procédés selon l'invention.

La séparation dans l'unité de séparation cryogénique s'effectue dans les figures 2 à 5 de la même manière que pour la figure 1. D'autres séparations cryogéniques peuvent également être utilisées.

Une solution selon l'invention, illustrée dans la Figure 2, est de sortir la fraction riche en hydrogène 5 de la boite froide à une température plus froide que le bout chaud de l'échangeur de chaleur E1. Ainsi la fraction est réchauffée jusqu'à une température inférieure à celle du monoxyde de carbone 23,24 refroidi dans le refroidisseur R, par exemple 4°C, et mélangée avec le CO produit directement par le compresseur de CO à 41°C pour produire un mélange gazeux 27 dit oxogas à 20°C. Cependant cette solution ne permet pas de bien contrôler la température de sortie de la fraction riche en hydrogène et donc ne permet pas de bien contrôler la température du mélange oxogas 27. Ceci a pour inconvénient de créer des perturbations du débit volumique à l'aspiration du compresseur d'oxogas C2 qui peuvent conduire à un arrêt du compresseur.

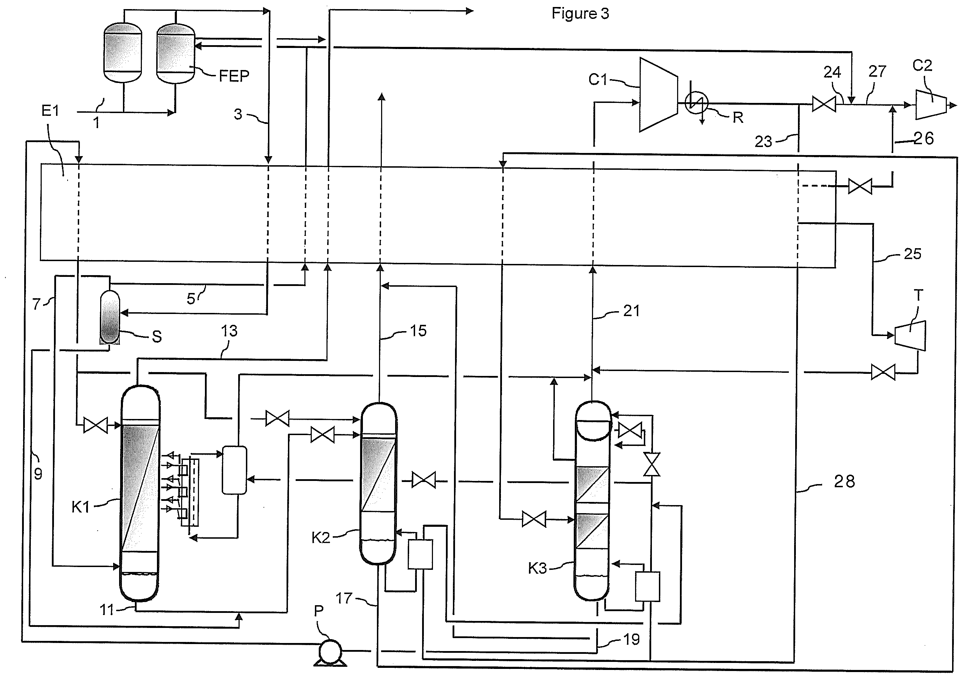

Selon la solution de la Figure 3, une partie 23 du CO produit par le compresseur CO C1 et refroidi par le refroidisseur R est alors refroidie dans la ligne d'échange principale E1 de la boite froide jusqu'à une température de moins de 39°C, par exemple d'environ 17°C. L'énergie de refroidissement du CO produit est apportée par le compresseur de cycle C1 commun à la séparation du gaz de synthèse ce qui évite l'investissement d'un groupe frigorifique supplémentaire. Une partie 26 du monoxyde de carbone prise à cette température de moins de 39°C est envoyée se mélanger avec le monoxyde de carbone refroidi 24 ou le mélange de monoxyde de carbone 24 et hydrogène 5. Ce court-circuitage du CO entre le compresseur C1 et la sortie de l'échangeur de la boite froide permet d'assurer une meilleure stabilité de la température de l'oxogas.

Ceci a pour effet de réduire également la température de l'hydrogène 5 qui sort du bout chaud de l'échangeur de chaleur E1 à 10°C.

La température de l'oxogas 27 peut être réglée précisément pour être autour d'une température prédéterminée, par exemple 20°C.

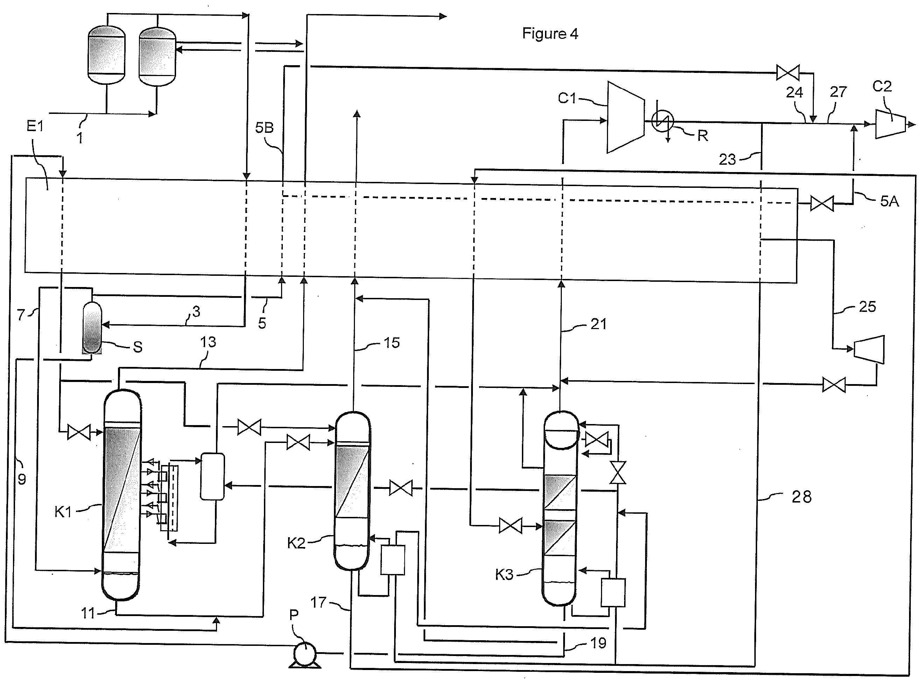

Selon la solution de la Figure 4, la température de l'oxogas 27 peut être réglée en rajoutant l'hydrogène au monoxyde de carbone à deux températures différentes. -La fraction 5 riche en hydrogène est séparée en deux et les deux parties sont produites à deux niveaux de températures différents par l'échangeur principal de la boite froide de séparation. Ici la fraction 5A est réchauffée jusqu'à une température intermédiaire de l'échangeur de chaleur El, par exemple 0°C et la fraction 5B est réchauffée jusqu'à une température plus élevée, de par exemple 10°C.

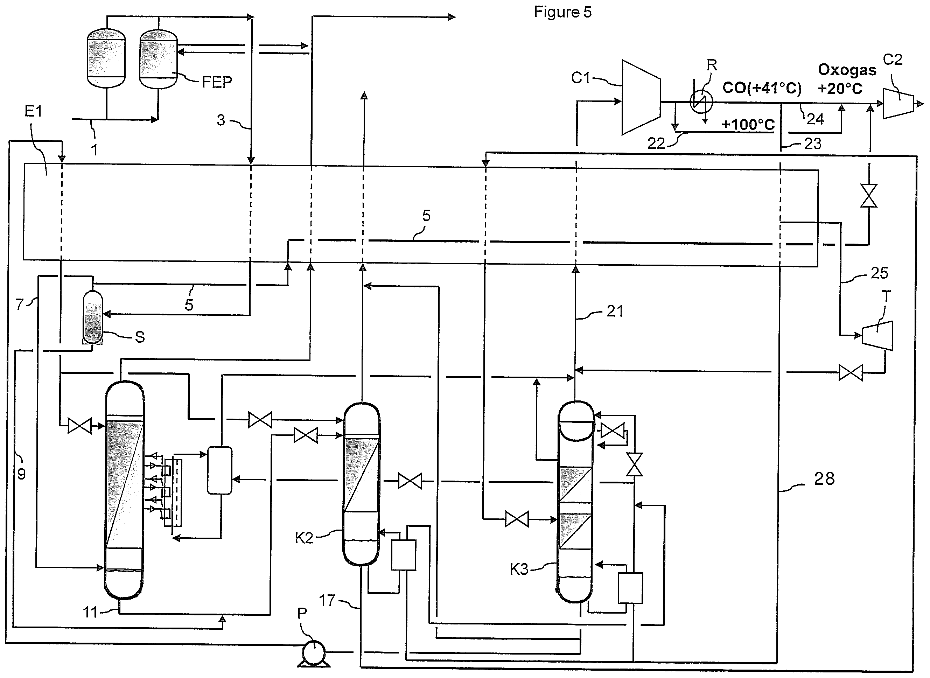

Selon la solution de la Figure 5, l'hydrogène 5 est entièrement réchauffé à une température basse, par exemple de 0°C et mélangé avec le monoxyde de carbone 24 à cette température à la sortie du refroidisseur R. Le réglage de la température peut être ajusté en rajoutant une partie 22 du monoxyde de carbone prise en amont du refroidisseur R à 100°C. De cette façon, la température de l'oxogaz 27 peut être réglée à une valeur prédéterminée, par exemple 20°C.

Il est évidemment possible de combiner les solutions illustrées entre elles. Par exemple, le mélange de monoxyde de carbone comprimé et non-refroidi 22 pour former l'oxogaz 27 peut s'appliquer aux Figures 2 à 4.

De même le monoxyde de carbone refroidi dans l'unité de séparation peut servir à régler la température de l'oxogaz dans les Figures 2,4 et 5.

Il n'est pas nécessaire que tous les échanges de chaleur de monoxyde de carbone à refroidir et/ou d'hydrogène à réchauffer s'effectuent dans l'échangeur de chaleur où se refroidit le gaz d'alimentation.

## Revendications

1. Procédé de production d'un mélange gazeux (27) de monoxyde de carbone et d'hydrogène dans lequel :
i) un premier gaz (21) comprenant au moins 50% de monoxyde de carbone est comprimé dans un premier compresseur (C1) pour former un premier gaz comprimé refroidi à une première température
ii) un deuxième gaz (5) comprenant au moins 50% d'hydrogène est mélangé avec le premier gaz comprimé pour former le mélange gazeux
iii) au moins un des premier et deuxième gaz provient d'une unité de séparation par distillation cryogénique dans lequel un gaz d'alimentation contenant de l'hydrogène et du monoxyde de carbone se refroidit dans un premier échangeur de chaleur (E1) et est séparé dans au moins une colonne de distillation (K1,K2,K3)
**caractérisé en ce que** :
a) une partie (23,28) du premier gaz comprimé est envoyée à l'unité de séparation, où elle se refroidit, par exemple dans le premier échangeur de chaleur, jusqu'à une deuxième température inférieure à la première température, par exemple jusqu'à une température intermédiaire du premier échangeur de chaleur et ensuite se mélange avec le mélange gazeux ou le deuxième gaz et/ou
b) au moins une partie du deuxième gaz (5A) se réchauffe dans l'unité de séparation, par exemple dans le premier échangeur de chaleur, jusqu' à une troisième température inférieure à la première température, par exemple jusqu'à une température intermédiaire du premier échangeur de chaleur et ensuite est envoyée se mélanger avec le premier gaz.

2. Procédé selon la revendication 1 dans lequel les premier et deuxième gaz (5,21) proviennent de l'unité de séparation par distillation cryogénique.

3. Procédé selon l'une des revendications précédentes dans lequel une partie (5A) du deuxième gaz se réchauffe dans l'unité de séparation jusqu'à une température supérieure à la troisième température et ensuite est envoyée se mélanger avec le premier gaz.

4. Procédé selon l'une des revendications précédentes dans lequel le mélange gazeux est ensuite comprimé dans un deuxième compresseur.

5. Procédé selon l'une des revendications précédentes dans lequel une première partie (25) du premier gaz comprimé refroidi est envoyée au premier (E1) ou à un deuxième échangeur de chaleur de l'unité de séparation où elle se refroidit jusqu'à une température intermédiaire de l'échangeur de chaleur et ensuite se mélange avec le mélange gazeux ou le deuxième gaz, et une autre partie (27) du premier gaz comprimé refroidi se refroidit à une température inférieure à la température intermédiaire du premier ou deuxième échangeur de chaleur et sert à réchauffer une colonne de distillation de l'unité.

6. Procédé selon l'une des revendications précédentes dans lequel une première partie du premier gaz comprimé refroidi est envoyée au premier (E1) ou à un deuxième échangeur de chaleur où elle se refroidit jusqu'à une température intermédiaire de l'échangeur de chaleur et ensuite se mélange avec le mélange gazeux ou le deuxième gaz, et une autre partie (25) du premier gaz comprimé se refroidit dans le premier ou deuxième échangeur de chaleur et est détendue dans une turbine pour fournir des frigories à l'unité.

7. Procédé selon l'une des revendications précédentes dans lequel seulement une première partie du premier gaz se refroidit dans un refroidisseur (R) en aval du premier compresseur et une autre partie (22) du premier gaz est prise en amont du refroidisseur et mélangée avec la première partie et/ou le mélange gazeux afin d'en régler la température.

8. Appareil de production d'un mélange gazeux de monoxyde de carbone et d'hydrogène comprenant:
un premier compresseur (C1), des moyens pour envoyer un premier gaz (21) comprenant au moins 50% de monoxyde de carbone se comprimer dans le premier compresseur pour former un premier gaz comprimé et refroidi (24) à une première température, des moyens pour mélanger un deuxième gaz (5) comprenant au moins 50% d'hydrogène avec le premier gaz comprimé pour former le mélange gazeux, une unité de séparation par distillation cryogénique, au moins un des premier et deuxième gaz provenant de l' unité de séparation par distillation cryogénique, un premier échangeur de chaleur (E1), des moyens pour envoyer un gaz d'alimentation contenant de l'hydrogène et du monoxyde de carbone se refroidir dans le premier échangeur de chaleur et se séparer dans au moins une colonne de distillation (K1,K2,K3)
**caractérisé en ce qu'**il comprend :
a) des moyens pour envoyer une partie du premier gaz comprimé à l'unité de séparation, se refroidir, par exemple dans le premier échangeur de chaleur, jusqu'à une deuxième température inférieure à la première température, par exemple jusqu'à une température intermédiaire du premier échangeur de chaleur et ensuite se mélanger avec le mélange gazeux ou le deuxième gaz et/ou
b) des moyens pour envoyer au moins une partie du deuxième gaz se réchauffer dans l'unité de séparation, par exemple dans le premier échangeur de chaleur, jusqu' à une troisième température inférieure à la première température, par exemple jusqu'à une température intermédiaire du premier échangeur de chaleur et ensuite se mélanger avec le premier gaz.

9. Appareil selon la revendication 8 comprenant des moyens pour envoyer une partie (23) du premier gaz comprimé à l'unité de séparation, se refroidir, par exemple dans le premier échangeur de chaleur (E1), jusqu'à une deuxième température inférieure à la première température.

10. Appareil selon la revendication 9 comprenant des moyens pour envoyer une partie du premier gaz se refroidir jusqu'à une température intermédiaire du premier échangeur de chaleur (E1) et ensuite se mélanger avec le mélange gazeux (27) ou le deuxième gaz (5).

11. Appareil selon la revendication 8, 9 ou 10 comprenant des moyens pour envoyer au moins une partie (5A) du deuxième gaz se réchauffer dans l'unité de séparation, par exemple dans le premier échangeur de chaleur (E1), jusqu' à une troisième température inférieure à la première température.

12. Appareil selon la revendication 11 dans lequel la troisième température est une température intermédiaire du premier échangeur de chaleur (E1) et comprenant des moyens pour envoyer au moins une partie (5A) du deuxième gaz (5) se mélanger avec le premier gaz (21).

## Patentansprüche

1. Verfahren zur Herstellung eines Gasgemisches (27) aus Kohlenmonoxid und Wasserstoff, wobei:
i) ein erstes Gas (21), das mindestens 50 % Kohlenmonoxid umfasst, in einem ersten Kompressor (C1) komprimiert wird, um ein erstes komprimiertes Gas zu bilden, das auf eine erste Temperatur abgekühlt ist
ii) ein zweites Gas (5), das mindestens 50 % Wasserstoff umfasst, mit dem ersten komprimierten Gas vermischt wird, um das Gasgemisch zu bilden
iii) mindestens eines des ersten und des zweiten Gases von einer Abscheidungseinheit durch kryogene Destillation stammt, wobei ein Wasserstoff und Kohlenmonoxid enthaltendes Einsatzgas in einem ersten Wärmeaustauscher (E1) abgekühlt wird und in mindestens einer Destillationskolonne (K1, K2, K3) zerlegt wird,
**dadurch gekennzeichnet, dass**:
a) ein Teil (23, 28) des ersten komprimierten Gases zur Abscheidungseinheit geleitet wird, wo er beispielsweise im ersten Wärmeaustauscher auf eine zweite Temperatur abgekühlt wird, die niedriger als die erste Temperatur ist, beispielsweise auf eine Zwischentemperatur des ersten Wärmeaustauschers, und anschließend mit dem Gasgemisch oder dem zweiten Gas vermischt wird, und/oder
b) zumindest ein Teil des zweiten Gases (5A) in der Abscheidungseinheit, beispielsweise im ersten Wärmeaustauscher, auf eine dritte Temperatur erwärmt wird, die niedriger als die erste Temperatur ist, beispielsweise auf eine Zwischentemperatur des ersten Wärmeaustauschers, und anschließend so geleitet wird, dass er mit dem ersten Gas vermischt wird.

2. Verfahren nach Anspruch 1, wobei das erste und das zweite Gas (5, 21) von der Abscheidungseinheit durch kryogene Destillation stammen.

3. Verfahren nach einem der vorstehenden Ansprüche, wobei ein Teil (5A) des zweiten Gases in der Abscheidungseinheit auf eine Temperatur erwärmt wird, die höher als die dritte Temperatur ist, und anschließend so geleitet wird, dass er mit dem ersten Gas vermischt wird.

4. Verfahren nach einem der vorstehenden Ansprüche, wobei das Gasgemisch anschließend in einem zweiten Kompressor komprimiert wird.

5. Verfahren nach einem der vorstehenden Ansprüche, wobei ein erster Teil (25) des ersten komprimierten abgekühlten Gases zum ersten (E1) oder zu einem zweiten Wärmeaustauscher der Abscheidungseinheit geleitet wird, wo er auf eine Zwischentemperatur des Wärmeaustauschers abgekühlt wird, und anschließend mit dem Gasgemisch oder dem zweiten Gas vermischt wird, und ein anderer Teil (27) des ersten komprimierten abgekühlten Gases auf eine Temperatur abgekühlt wird, die niedriger als die Zwischentemperatur des ersten oder zweiten Wärmeaustauschers ist und dazu dient, eine Destillationskolonne der Einheit zu erwärmen.

6. Verfahren nach einem der vorstehenden Ansprüche, wobei ein erster Teil des ersten komprimierten abgekühlten Gases zum ersten (E1) oder zu einem zweiten Wärmeaustauscher geleitet wird, wo er auf eine Zwischentemperatur des Wärmeaustauschers abgekühlt wird, und anschließend mit dem Gasgemisch oder dem zweiten Gas vermischt wird, und ein anderer Teil (25) des ersten komprimierten Gases im ersten oder zweiten Wärmeaustauscher abgekühlt und in einer Turbine expandiert wird, um der Einheit Frigorien zuzuführen.

7. Verfahren nach einem der vorstehenden Ansprüche, wobei nur ein erster Teil des ersten Gases in einem Kühler (R) stromabwärts vom ersten Kompressor abgekühlt wird und ein anderer Teil (22) des ersten Gases stromaufwärts vom Kühler entnommen und mit dem ersten Teil und/oder dem Gasgemisch vermischt wird, um die Temperatur davon zu regeln.

8. Vorrichtung zur Herstellung eines Gasgemisches aus Kohlenmonoxid und Wasserstoff, umfassend:
einen ersten Kompressor (C1), Mittel zum Leiten eines mindestens 50% Kohlenmonoxid umfassenden ersten Gases (21) zum Komprimieren in den ersten Kompressor, um ein erstes komprimiertes und auf eine erste Temperatur abgekühltes Gas (24) zu bilden, Mittel zum Mischen eines mindestens 50 % Wasserstoff umfassenden zweiten Gases (5) mit dem ersten komprimierten Gas, um das Gasgemisch zu bilden, eine Abscheidungseinheit durch kryogene Destillation, wobei mindestens eines des ersten und zweiten Gases von der Abscheidungseinheit durch kryogene Destillation stammt, einen ersten Wärmeaustauscher (E1), Mittel zum Leiten eines Wasserstoff und Kohlenmonoxid enthaltenden Einsatzgases, das im ersten Wärmeaustauscher abgekühlt und in mindestens einer Destillationskolonne (K1, K2, K3) zerlegt wird
**dadurch gekennzeichnet, dass** sie Folgendes umfasst:
a) Mittel zum Leiten eines Teils des ersten komprimierten Gases zur Abscheidungseinheit, zum Abkühlen beispielsweise im ersten Wärmeaustauscher auf eine zweite Temperatur, die niedriger als die erste Temperatur ist, beispielsweise auf eine Zwischentemperatur des ersten Wärmeaustauschers, und anschließend zum Vermischen mit dem Gasgemisch oder dem zweiten Gas, und/oder
b) Mittel zum Leiten zumindest eines Teils des zweiten Gases zum Erwärmen in der Abscheidungseinheit, beispielsweise im ersten Wärmeaustauscher, auf eine dritte Temperatur, die niedriger als die erste Temperatur ist, beispielsweise auf eine Zwischentemperatur des ersten Wärmeaustauschers, und anschließend zum Vermischen mit dem ersten Gas.

9. Vorrichtung nach Anspruch 8, umfassend Mittel zum Leiten eines Teils (23) des ersten komprimierten Gases zur Abscheidungseinheit zum Abkühlen beispielsweise im ersten Wärmeaustauscher (E1) auf eine zweite Temperatur, die niedriger als die erste Temperatur ist.

10. Vorrichtung nach Anspruch 9, umfassend Mittel zum Leiten eines Teils des ersten Gases zum Abkühlen auf eine Zwischentemperatur des ersten Wärmeaustauschers (E1) und anschließend zum Vermischen mit dem Gasgemisch (27) oder dem zweiten Gas (5).

11. Vorrichtung nach Anspruch 8, 9 oder 10, umfassend Mittel zum Leiten mindestens eines Teils (5A) des zweiten Gases zum Erwärmen in der Abscheidungseinheit, beispielsweise im ersten Wärmeaustauscher (E1), auf eine dritte Temperatur, die niedriger als die erste Temperatur ist.

12. Vorrichtung nach Anspruch 11, wobei es sich bei der dritten Temperatur um eine Zwischentemperatur des ersten Wärmeaustauschers (E1) handelt, und Mittel zum Leiten zumindest eines Teils (5A) des zweiten Gases (5) zum Vermischen mit dem ersten Gas (21) umfassend.

## Claims

1. Method for producing a gaseous mixture (27) of carbon monoxide and hydrogen, wherein:
i) a first gas (21) comprising at least 50% carbon monoxide is compressed in a first compressor (C1) to form a first compressed gas cooled to a first temperature
ii) a second gas (5) comprising at least 50% hydrogen is mixed with the first compressed gas to form the gaseous mixture
iii) at least one of the first and second gases comes from a cryogenic distillation separation unit wherein a feed gas containing hydrogen and carbon monoxide cools in a first heat exchanger (E1) and is separated in at least one distillation column (K1, K2, K3)
**characterised in that**:
a) a portion (23, 28) of the first compressed gas is sent to the separation unit, where it cools, for example in the first heat exchanger, to a second temperature lower than the first temperature, for example to an intermediate temperature of the first heat exchanger, and then mixes with the gaseous mixture or the second gas, and/or
b) at least one portion of the second gas (5A) heats in the separation unit, for example in the first heat exchanger, to a third temperature lower than the first temperature, for example to an intermediate temperature of the first heat exchanger, and is then sent to be mixed with the first gas.

2. Method according to claim 1, wherein the first and second gases (5, 21) come from the cryogenic distillation separation unit.

3. Method according to any of the preceding claims, wherein a portion (5A) of the second gas heats in the separation unit to a temperature greater than the third temperature and is then sent to be mixed with the first gas.

4. Method according to any of the preceding claims, wherein the gaseous mixture is then compressed in a second compressor.

5. Method according to any of the preceding claims, wherein a first portion (25) of the first cooled compressed gas is sent to the first (E1) or to a second heat exchanger of the separation unit where it cools to an intermediate temperature of the heat exchanger and then mixes with the gaseous mixture or the second gas, and another portion (27) of the first cooled compressed gas cools to a temperature lower than the intermediate temperature of the first or second heat exchanger and is used to heat a distillation column of the unit.

6. Method according to any of the preceding claims, wherein a first portion of the first cooled compressed gas is sent to the first (E1) or to a second heat exchanger where it cools to an intermediate temperature of the heat exchanger and then mixes with the gaseous mixture or the second gas, and another portion (25) of the first compressed gas cools in the first or second heat exchanger and is expanded in a turbine to supply frigories in the unit.

7. Method according to any of the preceding claims, wherein only a first portion of the first gas cools in a cooler (R) downstream of the first compressor and another portion (22) of the first gas is taken upstream of the cooler and mixed with the first portion and/or the gaseous mixture in order to regulate the temperature thereof.

8. Apparatus for producing a gaseous mixture of carbon monoxide and hydrogen, comprising:
a first compressor (C1), means for sending a first gas (21) comprising at least 50% carbon monoxide to be compressed in the first compressor to form a first compressed gas (24) cooled to a first temperature, means for mixing a second gas (5) comprising at least 50% hydrogen with the first compressed gas to form the gaseous mixture, a cryogenic distillation separation unit, at least one of the first and second gases coming from the cryogenic distillation separation unit, a first heat exchanger (E1), and means for sending a feed gas containing hydrogen and carbon monoxide to cool in the first heat exchanger and to be separated in at least one distillation column (K1, K2, K3)
**characterised in that** it comprises:
a) means for sending a portion of the first compressed gas to the separation unit, to cool, for example in the first heat exchanger, to a second temperature lower than the first temperature, for example to an intermediate temperature of the first heat exchanger, and then to be mixed with the gaseous mixture or the second gas, and/or
b) means for sending at least one portion of the second gas to be heated in the separation unit, for example in the first heat exchanger, to a third temperature lower than the first temperature, for example to an intermediate temperature of the first heat exchanger, and then to be mixed with the first gas.

9. Apparatus according to claim 8, comprising means for sending a portion (23) of the first compressed gas to the separation unit, to cool, for example in the first heat exchanger (E1), to a second temperature lower than the first temperature.

10. Apparatus according to claim 9, comprising means for sending a portion of the first gas to cool to an intermediate temperature of the first heat exchanger (E1) and then to be mixed with the gaseous mixture (27) or the second gas (5).

11. Apparatus according to claim 8, 9 or 10, comprising means for sending at least one portion (5A) of the second gas to heat in the separation unit, for example in the first heat exchanger (E1), to a third temperature lower than the first temperature.

12. Apparatus according to claim 11, wherein the third temperature is an intermediate temperature of the first heat exchanger (E1) and comprising means for sending at least one portion (5A) of the second gas (5) to be mixed with the first gas (21).
